# EUROPEAN PATENT APPLICATION

(11) **EP 3 753 872 A1**
(43) Date of publication of application: **23.12.2020**
(21) Application number: 20164531.4
(22) Date of filing: 20.03.2020
(51) Int. Cl.: B65G 29/00, B65G 47/84, B65B 35/26, F16H 1/16, F16H 27/04

(54) **CONVEYANCE ASSEMBLY FOR PACKAGING MACHINES**

(30) Priority: 19.06.2019 IT 201900009411
(71) Applicant: Sacmi Packaging & Chocolate S.p.A., 40026 Imola BO (IT)
(72) Inventor: FRANGELLA, Gianni, 40026 IMOLA BO (IT)
(74) Representative: Modiano, Micaela Nadia

(57) **Abstract**

A conveyance assembly (1) for packaging machines comprising at least one rotating component (2) such as a conveyance carousel, a wrapping wheel, a turntable and the like. The assembly (1) comprises at least one controlled electric motor (3) and at least one transmission element (4) provided with a driving shaft (5), keyed to the shaft of the electric motor (3), and a driven shaft (6), keyed to the shaft of the rotating component (2). The driving shaft (5) of the transmission element (4) incorporates an apparatus (7) such as a worm screw with a contoured helical profile, and the driven shaft (6) comprises a disk (8), provided with angularly distributed radial protrusions (9). The protrusions (9) are shaped complementarily and form, between contiguous protrusions (9), a seat for the temporary accommodation of a respective portion of the helical profile of the apparatus (7).

## Description

The present invention relates to a conveyance assembly for packaging machines, particularly suitable for machines provided with carousels, turntables, wheels and the like.

In general, the present invention relates to a machine designed for packaging in which there is at least one rotatable element designed to convey a product and/or a component of the package to be provided.

This type of rotating elements generally has to move with an intermittent motion, so as to remain stationary while respective operating means perform processes on the product to be packaged and/or on its packaging (at least one of which is retained on the rotatable element).

In machines of the known type, the intermittent rotary motion (according to a specific profile) about a fixed axis (as occurs, for example, with a product feeding disc or with a wrapping wheel) can be obtained by using a mechanical indexing drive (which can be generically defined as "cam solution") or by resorting to a controlled motor (which can be generically defined as "electric cam solution") which allows to actuate with great precision the respective rule of motion, processed by a control and management unit located upstream.

The adoption of mechanical indexing drives with cams allows to obtain excellent performance (in terms of speed and productivity) and is also very reliable; on the other hand, it is very inflexible (any configuration changing operations are complex and onerous) and the assembly and installation operations can be extremely difficult, especially for the elimination of plays (consider the tuning of so-called "separate indexing drives").

The inherent defects of this constructive solution make it inconvenient if flexible machine structures, with reduced times for transition from one configuration for use to another, are required.

The use of controlled motors ensures that a more flexible solution is obtained, with very short configuration changing times and especially with extremely "shorter" motion transmission chains. The main disadvantage is that this solution is closely tied to the type of dynamics, which even today does not allow to reach the speeds that characterize cam-based mechanical indexing drives, for reasons fundamentally of shaft control.

Essentially, having very high conveyance rates, in an assembly of the type known as "electric cam", entails a positioning uncertainty (it is not possible to be certain that the load stops in conditions of perfect alignment with the respective operating station) which is not compatible with the requirements of a packaging system.

The aim of the present invention is to solve the problems described above, by providing a conveyance assembly for packaging machines that allows high conveyance speeds of the respective load.

Within this aim, an object of the invention is to provide a conveyance assembly for packaging machines that can be reconfigured simply during operations for changing format or if it is necessary to apply a generic modification to the rule of motion.

Another object of the invention is to provide a conveyance assembly for packaging machines that is constituted by a small number of compact components.

A further object of the present invention is to provide a conveyance assembly for packaging machines that has low costs, is relatively simple to provide in practice and is safe in application.

This aim and these and other objects which will become better apparent hereinafter are achieved by a conveyance assembly for packaging machines of the type comprising at least one rotating component such as a conveyance carousel, a wrapping wheel, a turntable and the like, characterized in that it comprises
- at least one controlled electric motor,
- at least one transmission element provided with a driving shaft, keyed to the shaft of said electric motor, and a driven shaft, keyed to the shaft of said rotating component,
said driving shaft of said transmission element incorporating a worm screw with a contoured helical profile, and said driven shaft comprising a disk, provided with angularly distributed radial protrusions, said protrusions being shaped complementarily and forming, between contiguous protrusions, a seat for the temporary accommodation of a respective portion of said helical profile of said apparatus.

This aim and these objects are also achieved by means of a packaging machine of the type that comprises at least one rotating component of the type of a movement carousel, a wrapping wheel, a turntable and the like, characterized in that it comprises at least one assembly for the conveyance of said at least one rotating component provided with at least one controlled electric motor, at least one transmission element provided with a driving shaft, keyed to the shaft of said electric motor, and a driven shaft, which is keyed to the shaft of said rotating component, said driving shaft of said transmission element incorporating an apparatus of the type of a worm screw with a contoured helical profile, and said driven shaft comprising a disc, provided with angularly distributed radial protrusions, said protrusions being shaped complementarily and forming, between contiguous protrusions, a seat for the temporary accommodation of a respective portion of said helical profile of said apparatus.

Further characteristics and advantages of the invention will become better apparent from the description of a preferred but not exclusive embodiment of the conveyance assembly for packaging machines according to the invention, illustrated by way of non-limiting example in the accompanying drawings, wherein:

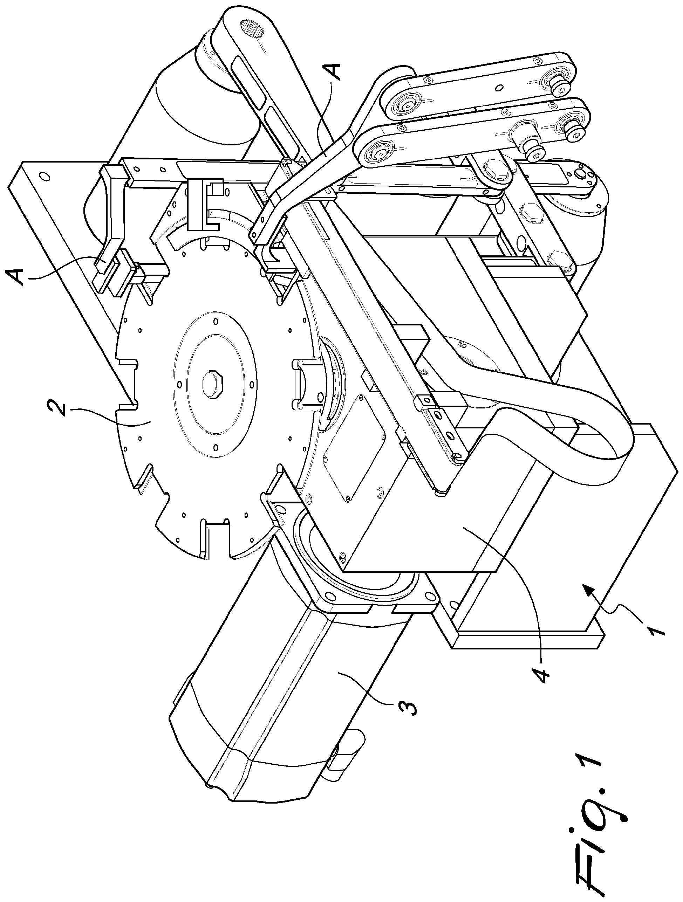

Figure 1 is a schematic perspective view of a portion of a packaging machine provided with the conveyance assembly according to the invention;

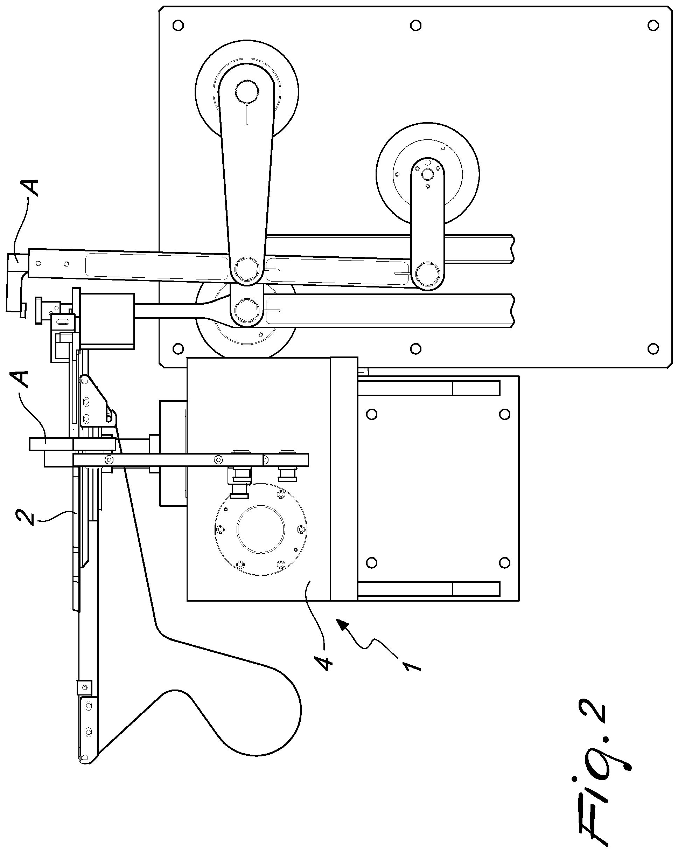

Figure 2 is a side view of the machine portion of Figure 1;

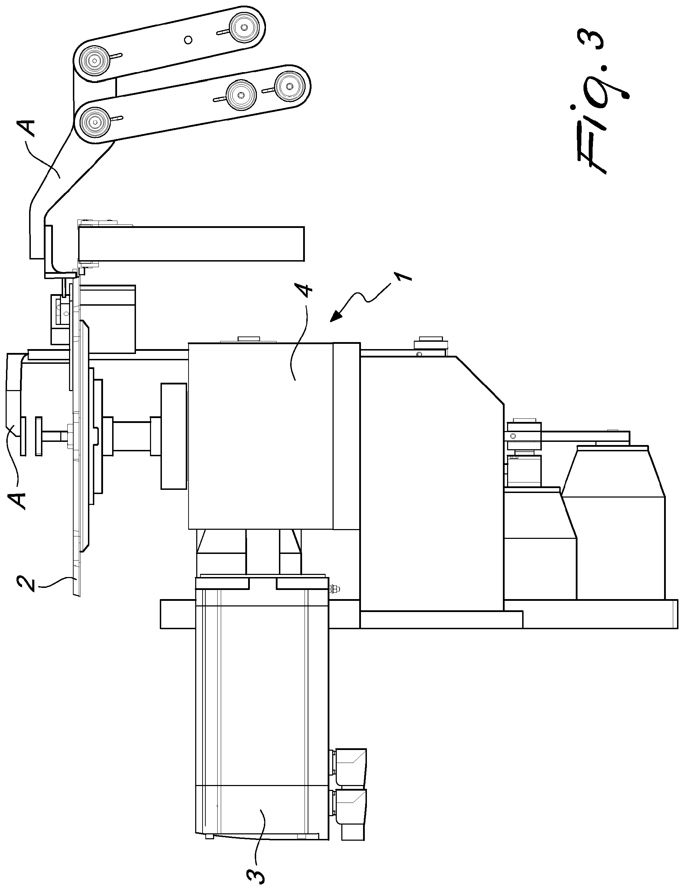

Figure 3 is a front view of the machine portion of Figure 1;

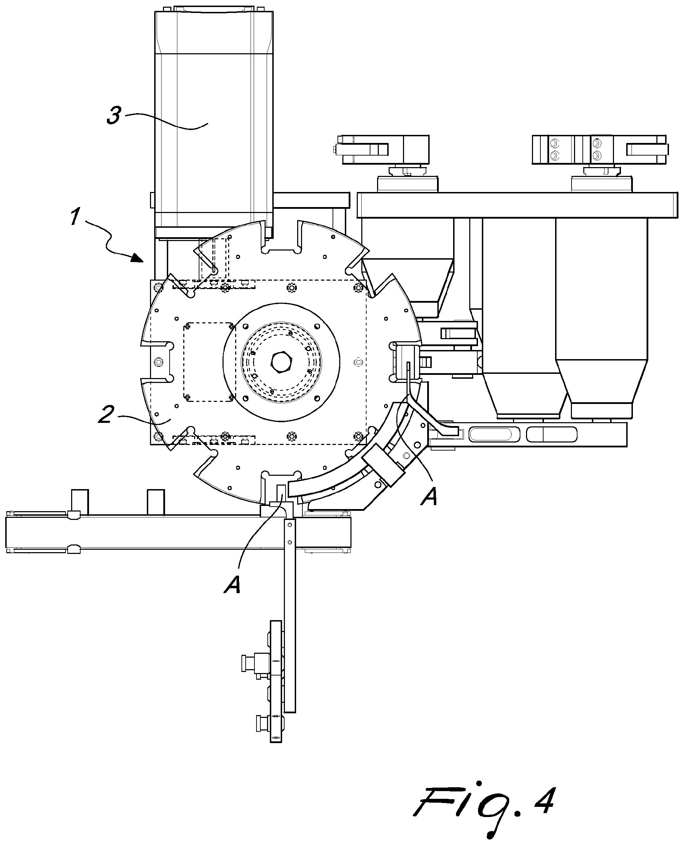

Figure 4 is a top view of the machine portion of Figure 1;

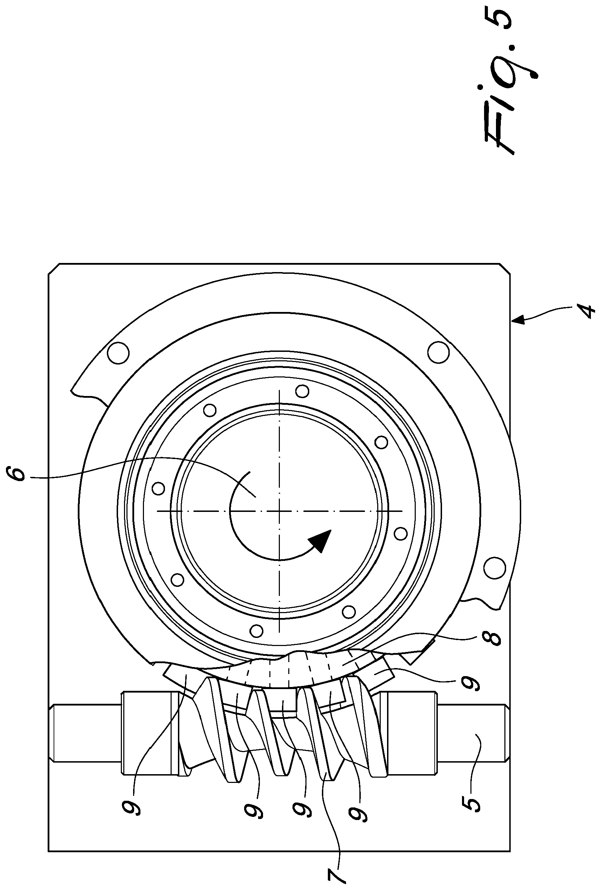

Figure 5 is a partially sectional schematic top view of a transmission element of an assembly according to the invention.

With reference to the figures, the reference numeral 1 generally designates a conveyance assembly 1 for packaging machines.

The conveyance assembly 1 comprises at least one rotating component 2 of the type of a conveyance carousel, a wrapping wheel, a turntable, and the like: this component in practice constitutes the load that the assembly will have to convey according to a predefined rule of motion.

In particular, the rotating component 2 (i.e., the load with which the assembly 1 is associated) will frequently require an intermittent conveyance, in which short stops (at which specific processes will be performed on the products and/or on the packages managed by the machine in which the assembly 1 is installed) will be alternated with rotations at high speed. The assembly 1 according to the invention is particularly efficient and functional at rules of motion in which the stop times are very short and the rotation rate is very high. In any case, the use of an assembly 1 according to the invention is not excluded even in machines that require different rules of motion.

The assembly 1 comprises at least one controlled electric motor 3, which can be of any type depending on the specific application that one intends to implement.

In particular it is specified that the controlled electric motor 3 could validly be a brushless motor, i.e., a direct current or alternating current electric motor which has a permanent-magnet rotor and a stator with stationary or rotating magnetic field. The switching of the current that circulates in the windings of the stator, and therefore the variation of the orientation of the magnetic field generated by them, occurs electronically.

In a brushless motor the rotor does not have a winding and is instead provided with permanent magnets, while the magnetic field generated by the windings on the stator is variable. Since the motor operates in direct current, in order to provide the rotation of the magnetic field generated in the stator, a controller for switching the supply current controls the current switching and therefore the rotation of the magnetic field. Since the controller must know the position of the rotor with respect to the stator in order to be able to determine the orientation to be given to the magnetic field, it is usually connected to a sensor for a "position-based" feedback (normally a "speed-based" feedback is also combined with this for complete control of the rule of motion of the motor).

The assembly 1 furthermore comprises at least one transmission element 4 provided with a driving shaft 5, which is keyed to the shaft of the electric motor 3, and with a driven shaft 6, which is keyed to the shaft of the rotating component 2.

The driving shaft 5 of the transmission element 4 advantageously incorporates an apparatus 7 such as a worm screw with a contoured helical profile.

The driven shaft 6 instead favorably comprises a disk 8 provided with radial protrusions 9 which are distributed angularly (in a uniform manner).

The protrusions 9 are positively shaped complementarily (with respect to the shape of the helical profile of the apparatus 7) and usefully define, between contiguous protrusions 9, a seat for the temporary accommodation of a respective portion of the helical profile of the apparatus 7.

In order to allow easy management of the operation of the assembly 1, it is specified that the assembly 1 can advantageously comprise a control and management unit, of the programmable type and provided with data storage means: the unit is effectively connected to the at least one electric motor 3 for the definition of the respective rules of motion.

Furthermore, it is specified that there is at least one user interface element (such as a display, a keyboard, a screen, even of the touch type, a keypad, and the like) functionally associated with the control and management unit for the monitoring and programming of the motion of the rotating component 2.

In order to define precisely the characteristics of the at least one transmission element 4, it is specified that the contoured helical profile of the apparatus 7 such as a worm screw is of the type known as hourglass cam or cylindrical cam.

In practice, differently from a simple worm screw (which has a helical shape of its start that is defined by a constant pitch), an hourglass cam or cylindrical cam has a behavior of its start (or of the groove delimited between two continuous crests of the start), and of the protrusion of the start with respect to the inside diameter, which is variable along its extension, in order to define a specific movement of the disk 8 provided with radial protrusions 9 that it moves.

With particular reference to the constructive solution described previously (although the structural architecture that follows can be coupled to any apparatus 7 of the type of a worm screw), the radial protrusions 9 that are angularly distributed with respect to the disk 8 can conveniently be rollers, which are pivoted freely on the lateral surface of the disk 8, each with respect to its own rotation axis. The rotation axis of each roller 9 (radial protrusion) has a radial orientation with respect to the disk 8.

Furthermore, it is noted that in order to obtain an optimum dynamics of the assembly 1 (which will allow to use it as an actuator for components 2 of machines for packaging and packing with high productivity), the at least one transmission element 4 that is adopted shall preferably have to have a transmission ratio comprised between 1:3 and 1:10.

It is noted that in a possible application of unquestionable practical interest, the at least one rotating component 2 can be validly a conveyance carousel provided with a plurality of receptacles, for the temporary accommodation of at least one product to be subjected to specific processes, at work stations A arranged along the perimeter of said carousel.

According to an embodiment which is alternative and relevant for application purposes, the at least one rotating component 2 can instead be efficiently a wrapping wheel provided with temporary grip means for at least one product to be subjected to specific processes, at work stations A arranged along the perimeter of said wheel.

Finally, the possibility is not excluded that the at least one rotating component 2 can advantageously be a turntable, provided with shaping elements for wrapping and/or packaging material.

In practice, the assembly 1 according to the invention can be used to convey the products to be subjected to processes (for example to be packaged) or the respective material can be used for packaging or both.

In any case, it is not excluded to adopt the assembly 1 for different conveyance operations which in any case provide for an intermittent rotary motion characterized by high dynamics (high average rotation rates of the rotating component).

The technical field of reference of the present invention also extends to a packaging machine which comprises at least one rotating component 2 such as a conveyance carousel, a wrapping wheel, a turntable, and the like.

The machine according to the invention comprises at least one assembly 1 for the conveyance of the at least one rotating component 2.

Such assembly 1 is conveniently provided with at least one controlled electric motor 3 and with at least one transmission element 4 provided with a driving shaft 5, which is keyed to the shaft of the electric motor 3, and with a driven shaft 6, which is keyed to the shaft of the rotating component 2.

In this specific configuration, the driving shaft 5 of the transmission element incorporates favorably an apparatus 7 such as a worm screw with a contoured helical profile, while the driven shaft 6 validly comprises a disk 8 provided with angularly distributed radial protrusions 9.

The protrusions 9 are shaped complementarily with respect to the shape of the helical profile of the apparatus 7 and form, between continuous protrusions 9, a seat for the temporary accommodation of a respective portion of the helical profile of the apparatus 7.

The adoption of the assembly 1 according to the invention (or the provision of a machine according to the invention) has numerous and important advantages.

First of all, considerable flexibility in configuration is observed as regards the dimensions of the format, since the rule of motion of the motor 3 can be modified by a specialized operator by acting through the user interface: in this manner, the rigid constraints that are typical of the adoption of exclusively mechanical cams are eliminated, introducing the possibility to vary the number of stations, i.e., the stop points (which correspond to the receptacles for accommodating the products, or to the seats in which the grip means or the like are arranged), which is matched by a modification of the phase of the conveyance (the correct alignment with respect to specific references) and of the displacement angle (the breadth of the angle by which the component 2 must rotate in order to align a new stop point with a respective and corresponding work station of the machine).

The assembly 1 and the machine according to the invention furthermore ensure a considerable simplification of the motion transmission chain, with evident advantages in play reduction, arising from a kinematic chain that is simpler and is constituted by rigid and mutually rigid elements, and a reduction in the number of parts (understood as the necessary components).

A drastic decrease in errors due to assembly and production of the parts will also be observed: using a small number of structurally simple components in fact allows to reduce the risks that can be ascribed to human error. These characteristics also lead to a drastic reduction in the time required for assembly, which entails a reduction in labor costs.

Moreover, the labor used does not need to be highly specialized (as instead occurs currently) since the assembly and installation operations are very simple.

As a whole, the provision time (from design to installation and testing) of the entire machine that will incorporate the assembly 1 according to the invention is distinctly shorter than the one provided with machines of the known type.

The assembly 1 according to the invention and the machine that incorporates it allowed to combine the dynamic performance, the rigidity and the precision of a mechanical cam transmission (which are typical of a "mechanical cam" actuation) with the flexibility of an electric source of motion (typical of an "electric cam" actuation).

By means of interventions for changing format or generally for modification that are applied by acting on the control and management units, the assembly 1 and the machine that incorporates it allow to vary considerably the rule of motion, the number of stations, both in terms of phase of motion and in terms of movement angle.

From the point of view of the manufacturer, the assembly 1 and the machine according to the invention are extremely advantageous, since they allow the manufacturer to start production of significant number of assemblies (or machines) of a generic type, without having to predict beforehand which type of configuration of use they will require. By means of the programming of the rule of motion it will be possible to adapt the assembly 1 or the machine (which will be initially of a generic type) to any specific application. This also ensures subsequent quick conversion of an existing machine (or of a previously installed assembly) to a different process, thus demonstrating a versatility which was up to now entirely absent in high-productivity packaging machines.

The adoption of the assembly 1 according to the invention and of the machine that incorporates it furthermore allows to cover all the possible requirements of customers by resorting to a limited number of components (or of work assemblies) on the part of the manufacturer.

Advantageously, the present invention solves the problems described previously, proposing a conveyance assembly 1 for packaging machines that allows high conveyance speeds of the respective load.

Usefully, the assembly 1 according to the invention can be simply reconfigured, at operations for changing format or if it is necessary to make a generic modification to the rule of motion.

Favorably, the assembly 1 according to the invention is considered by a small number of components having a small overall space occupation.

Validly, the assembly 1 according to the invention is relatively simple to provide in practice and is of low cost: these characteristics make the assembly 1 according to the invention and the machine that incorporates it innovations of assured application.

The invention thus conceived is susceptible of numerous modifications and variations, all of which are within the scope of the appended claims; all the details may furthermore be replaced with other technically equivalent elements.

In the exemplary embodiments shown, individual characteristics, given in relation to specific examples, may actually be interchanged with other different characteristics that exist in other exemplary embodiments.

In practice, the materials used, as well as the dimensions, may be any according to the requirements and the state of the art.

The disclosures in Italian Patent Application No. 102019000009411 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A conveyance assembly for packaging machines of the type comprising at least one rotating component (2) such as a conveyance carousel, a wrapping wheel, a turntable and the like, **characterized in that** it comprises
- at least one controlled electric motor (3),
- at least one transmission element (4) provided with a driving shaft (5), keyed to the shaft of said electric motor (3), and a driven shaft (6), keyed to the shaft of said rotating component (2),
said driving shaft (5) of said transmission element (4) incorporating an apparatus (7) such as a worm screw with a contoured helical profile, and said driven shaft (6) comprising a disk (8), provided with angularly distributed radial protrusions (9), said protrusions (9) being shaped complementarily and forming, between contiguous protrusions (9), a seat for the temporary accommodation of a respective portion of said helical profile of said apparatus (7).

2. The conveyance assembly according to claim 1, **characterized in that** it comprises a control and management unit of the programmable type and provided with data storage elements, said unit being connected to said at least one electric motor (3) in order to define the at least one respective rule of motion.

3. The conveyance assembly according to claim 2, **characterized in that** it comprises at least one user interface element which is functionally associated with said control and management unit for the monitoring and programming of the motion of said rotating component (2).

4. The conveyance assembly according to claim 1, **characterized in that** said contoured helical profile of said apparatus (7) of the type of a worm screw is of the type known as hourglass cam or cylindrical cam.

5. The conveyance assembly according to claim 1, **characterized in that** said radial protrusions (9) angularly distributed with respect to said disk (8) are rollers which are freely pivoted on the lateral surface of said disk (8) with respect to their axis of rotation, which has a radial orientation with respect to said disk (8).

6. The conveyance assembly according to claim 1, **characterized in that** said at least one transmission element (4) has a transmission ratio comprised between 1:3 and 1:10.

7. The conveyance assembly according to one or more of the preceding claims, **characterized in that** said at least one rotating component (2) is a conveyance carousel provided with a plurality of receptacles for the temporary accommodation of at least one product to be subjected to specific processes, at work stations (A) arranged along the perimeter of said carousel.

8. The conveyance assembly according to one or more of claims 1 to 6, **characterized in that** said at least one rotating component (2) is a wrapping wheel provided with temporary grip means for at least one product to be subjected to specific processes, at work stations (A) arranged along the perimeter of said wheel.

9. The conveyance assembly according to one or more of claims 1 to 6, **characterized in that** said at least one rotating component (2) is a turntable provided with forming elements for wrapping and/or packaging material.

10. A packaging machine of the type comprising at least one rotating component (2) of the type of a conveyance carousel, a wrapping wheel, a turntable and the like, **characterized in that** it comprises at least one assembly (1) for the conveyance of said at least one rotating component (2) provided with at least one controlled electric motor (3), at least one transmission element (4) provided with a driving shaft (5), keyed to the shaft of said electric motor (3), and a driven shaft (6), keyed to the shaft of said rotating component (2), said driving shaft (5) of said transmission element (4) incorporating an apparatus (7) such as a worm screw with a contoured helical profile, and said driven shaft (6) comprising a disk (8) provided with angularly distributed radial protrusions (9), said protrusions (9) being shaped complementarily and forming, between contiguous protrusions (9), a seat for the temporary accommodation of a respective portion of said helical profile of said apparatus (7).
